# EUROPEAN PATENT APPLICATION

(11) **EP 3 431 229 A1**
(43) Date of publication of application: **23.01.2019**
(21) Application number: 17766562.7
(22) Date of filing: 10.03.2017
(51) Int. Cl.: B25J 9/22, G05B 19/42

(54) **ACTION INFORMATION GENERATION DEVICE**

(30) Priority: 14.03.2016 JP 2016049623
(71) Applicant: Omron Corporation, Kyoto-shi, Kyoto 600-8530 (JP)
(72) Inventor: ANDO, Tanichi, Komaki-city Aichi 485-0802 (JP)
(74) Representative: Horn Kleimann Waitzhofer Patentanwälte PartG mbB
(86) International application number: PCT/JP2017/009718
(87) International publication number: WO 2017/159562

(57) **Abstract**

An operation information generating apparatus includes: a task data recording unit configured to record, as task data, information regarding an operation of a person from a start to an end of a task; an operation classifying unit configured to divide an overall operation from the start to the end of the task into a plurality of partial operations; and an operation combining unit configured to select a best partial operation for each partial operation from a plurality of samples of the task data for the same task, and generates data of an optimum operation of the entire task by combining the selected best partial operations.

## Description

### TECHNICAL FIELD

The present invention relates to a technique for generating and disseminating an optimum operation for efficiently carrying out a task.

### RELATED ART

At manufacturing sites or the like, the problem of how to disseminate skills of experts has become apparent. Conventionally, a method for assisting in dissemination of experts' skills, a method of digitalizing experts' skills, and the like, have been proposed (see Patent Documents 1 to 3).

There are methods of teaching an industrial robot by an expert showing an example thereto. A method of causing a robot to perform self-learning through machine learning has also been proposed. However, trials need to be repeated a very large number of times to acquire a predetermined task efficiency, and accordingly, this method is not practical. For this reason, in the case of teaching a robot, teaching by a person is often more efficient than teaching through machine learning.

### RELATED ART DOCUMENTS

### PATENT DOCUMENTS

Patent Document 1: JP 2005-215314A
Patent Document 2: JP 2007-275933A
Patent Document 3: JP 2013-172193A

### SUMMARY OF THE INVENTION

### PROBLEM TO BE SOLVED BY THE INVENTION

To teach a new task to a robot, first, an operator himself (herself) needs to repeat this task again and again, and master the task. This is because the teaching will be useless unless the operator makes the robot memorize the experts' efficient operations. However, it is not easy even for an expert in the field to find out an optimum procedure of a new task and master it enough to reproduce this procedure in limited time. It is all the more difficult when components with complex shapes are to be assembled in the task, or the line of flow is complex, or there are many task steps, for example.

Note that the problem has been described so far while taking the teaching of an industrial robot as an example, but similar problems may also occur in other technical fields or other applications.

The present invention has been made in view of the foregoing situation, and aims to provide a technique of automatically generating an optimum operation for efficiently carrying out the task.

### MEANS FOR SOLVING THE PROBLEMS

To achieve the above-stated object, the present invention employs the following configuration.

An operation information generating apparatus according to one aspect of the present invention includes: a task data recording unit configured to record, as task data, information regarding an operation of a person from a start to an end of a task; an operation classifying unit configured to divide an overall operation from the start to the end of the task into a plurality of partial operations; and an operation combining unit configured to select a best partial operation for each partial operation from a plurality of samples of the task data for the same task, and generate data of an optimum operation of the entire task by combining the selected best partial operations. This configuration makes it possible to automatically generate a better optimum operation (model) in which not only the entire task is optimized but also each partial operation is optimized locally, using the plurality of samples of the task data.

It is preferable that the operation information generating apparatus further includes an operation selecting unit configured to select two or more good samples with good task efficiency, from a plurality of samples of task data recorded while the same task is carried out a plurality of number of times, wherein the operation combining unit generates the data of the optimum operation using the selected two or more good samples. This configuration makes it possible to exclude a sample that includes a needless operation, and to generate a more reliable optimum operation. It is preferable that the operation selecting unit selects, as the good samples, a predetermined number or a predetermined ratio of samples in accordance with a task time of the entire task. For example, it is preferable that the operation selecting unit selects, as the good samples, a predetermined number or a predetermined ratio of samples in order from a sample in which the task time of the entire task is shortest.

It is preferable that the operation information generating apparatus further includes one or more sensors configured to detect motion of an operator, wherein the task data recording unit records sensor data obtained from the sensors. Thus, motion of the operator can be collected automatically. Furthermore, the motion of the operator can be captured as an objective physical quantity using the sensor data. For example, it is preferable that the sensors include a motion sensor that is attached to the body of an operator. Physical motion of the operator can be captured directly and correctly by using the motion sensor attached to the body.

It is preferable that the operation classifying unit detects a changing point of motion of the body of an operator based on the task data, and divides the overall operation into the plurality of partial operations based on the changing point of motion. This configuration makes it possible to classify partial operations using an appropriate unit.

It is favorable that the operation combining unit selects the best partial operations by evaluating partial operations in each sample using a predetermined evaluation criterion. For example, it is favorable that the predetermined evaluation criterion includes task time of a partial operation. It is also favorable that the predetermined evaluation criterion includes at least one of task quality, safety of an operator, a degree of fatigue of an operator, and ease of reproduction of an operation.

It is favorable that the operation combining unit comprises a partial operation matching unit configured to match motion at an end of a first partial operation with motion at a start of a second partial operation, in a case that the first partial operation is joined to the second partial operation, the first partial operation and the second partial operation being in different samples. Thus, an optimum operation with smooth motion and without inconsistency can be generated.

Note that the present invention can be considered as an operation information generating apparatus that has at least some of the above-described configurations or functions. The operation information generating apparatus may be constituted by a single apparatus, or may also be constituted by a combination of a plurality of apparatuses. The present invention can also be considered as an operation information generating method that includes at least a part of the above-described processing, or a program for causing a computer to perform this method, or a computer-readable recording medium that non-temporarily stores this program. The above-described configurations and processing can be combined to constitute the present invention, provided there is no technical inconsistency.

### EFFECTS OF THE INVENTION

According to one aspect of the present invention, an optimum operation for efficiently carrying out tasks can be automatically generated.

### BRIEF DESCRIPTION OF THE DRAWINGS

FIG. 1 is an external view illustrating a hardware configuration of an operation information generating apparatus.
FIG. 2 is a block diagram illustrating a functional configuration of the operation information generating apparatus.
FIG. 3 schematically illustrates a relationship between tasks and partial operations.
FIG. 4 is a flowchart of operation information generation processing.
FIG. 5 illustrates an example of an assembly task.
FIG. 6 is a flowchart of a task data recording unit.
FIG. 7 shows an example of a GUI of the task data recording unit.
FIG. 8 is a flowchart of an operation selecting unit.
FIGS. 9(A) and 9(B) illustrate an internal configuration of an operation classifying unit.
FIG. 10 is a flowchart of the operation classifying unit.
FIG. 11 illustrates an internal configuration of an operation combining unit.
FIG. 12 is a flowchart of the operation combining unit.
FIG. 13 shows an example of screen display of an optimum operation.
FIG. 14 shows an example of screen display of an optimum operation.

### EMBODIMENTS OF THE INVENTION

An operation information generating apparatus according to one aspect of the present invention is for automatically generating an optimum operation (model operation) for a task based on data in which operations of a person who is carrying out the task are recorded more than once. The following embodiment describes an example of applying the present invention to the optimization of product assembly tasks in a factory, but the applicable scope of the present invention is not limited to this example. For example, the present invention is also applicable to generation of an optimum operation (model) in various fields or applications, including craft production, operating, running, and maintening apparatuses or systems, operations and procedures in surgery, and so on. Optimum operation data generated by the apparatus according to one aspect of the present invention can also be applied to various applications, including control of robots or various apparatuses, archives of experts' skills, tools for training new operators or the like, simulator development, and so on.

### Configuration of operation information generating apparatus

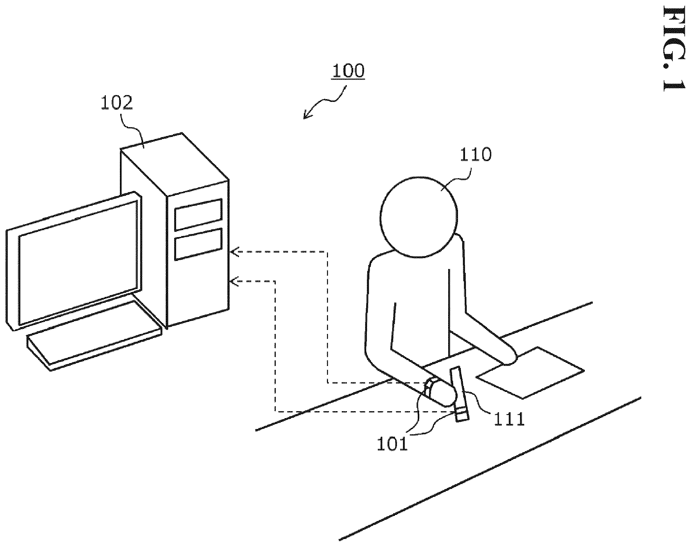

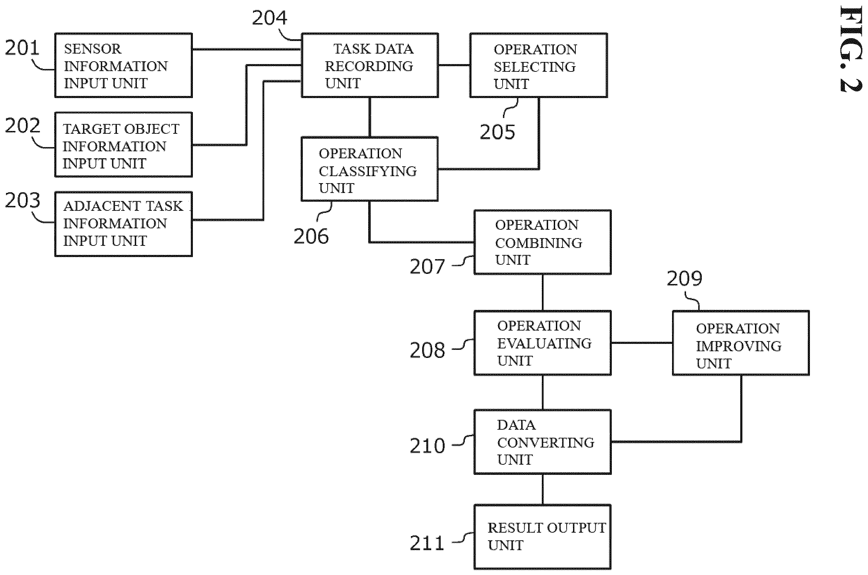

The overall configuration of the operation information generating apparatus according to an embodiment of the present invention will be described with reference to FIGS. 1 and 2. FIG. 1 is an external view illustrating a hardware configuration of an operation information generating apparatus, and FIG. 2 is a block diagram illustrating a functional configuration of the operation information generating apparatus. An operation information generating apparatus 100 according to this embodiment analyzes operations of a person 110 who is carrying out a task, using sensor data acquired from sensors 101 attached to the person 110 or an object 111, so that a better operation can be evaluated objectively.

### Hardware configuration

The operation information generating apparatus 100 includes one or more sensors 101, and an information processing apparatus 102, which serve as main hardware.

For example, the information processing apparatus 102 can be constituted by a general-purpose computer that has hardware resources such as a processor (CPU), a memory, a storage device (hard disk, semiconductor disk etc.), an input device (keyboard, mouse, touch panel etc.), a display device, and a communication device. Functions of the operation information generating apparatus 100 shown in FIG. 2 are realized by loading a program stored in the storage device to the memory and executing this program with the processor. Note that the information processing apparatus 102 may be constituted by a single computer, or may also be constituted by distributed computing using a plurality of computers. Also, some of the functions of the information processing apparatus 102 may also be realized by a cloud server. To speed up processing, some or all of the functions of the information processing apparatus 102 can be realized using dedicated hardware (e.g. GPU, FPGA, ASIC etc.).

The sensors 101 are devices for recording, as data, operations of the person 110 who is carrying out a task. Any types or modes of sensors may be used as long as operations of the person 110 can be directly or indirectly detected or estimated (surmised). For example, the sensors 101 include a sensor for sensing the person 110, a sensor for sensing an object 111 that is handled by the person 110 during a task (hereinafter, "task object"), a sensor for sensing any intermediary object between the person 110 and the task object 111, and the like. Although some examples of the sensors 101 will be described below, the operation information generating apparatus 100 does not need to include all of the sensors 101. Only necessary sensors 101 may be provided in accordance with the apparatus configuration, the type or content of the task, usage, or the like.

The sensor 101 for sensing the person 110 may be a motion sensor that senses motion of the person's head, line of sight, hand, foot, body, or the like. For example, motion of the right hand and left hand during the assembly task can be detected using an acceleration sensor or an angular acceleration sensor that is attached to the left and right wrists of the person 110. Furthermore, motion of a finger can also be detected by attaching an acceleration sensor or an angular acceleration sensor to the finger. A relationship between motion of the person 110 and surrounding objects can be sensed by analyzing a moving image captured by an image sensor (camera), rather than a sensor attached to the person 110. Alternatively, motion of the person 110 can also be sensed by detecting a marker attached to the person 110 using a magnetic sensor or an infrared sensor.

The sensor 101 for sensing the person 110 may be, for example, a face image sensor that senses the facial expression, motion of eyes, and the way the person 110 moves the face, a myoelectric sensor that senses motion of muscles using electrodes attached to respective parts of the body such as the person's hand, leg, neck, and torso, an image sensor that senses the direction of a line of sight of the person 110 or a location at which the person 110 is gazing, or the like.

Any form of sensor 101 may be employed. For example, a sensor provided in a smartphone may be used, or a sensor provided in a wearable device such as a smartwatch or smartglasses may also be used.

The task object 111 is a component to be assembled in the case of an assembly task, or is an apparatus in the case of operating and running the apparatus. Since the state of the task object 111 may also affect operations of the person 110, using information obtained by sensing the state of the task object 111 as indirect information may help correct evaluation of the operations of the person 110. For example, examples of the sensors may include a sensor that detects the spatial position of the task object 111, a sensor that detects the orientation of the task object 111, a sensor that detects the state (change in the state such as acceleration, temperature, color, or shape) of the task object 111, a sensor that detects the environmental state (physical quantity and information associated with the environment, such as surrounding temperature and humidity) of the task object 111, and the like.

An intermediary object between the person 110 and the task object 111 refers to a tool or a device to be used in assembly in the case of an assembly task. Since the state of such an intermediary object may also affect operations of the person 110, using information obtained by sensing the state of the intermediary object as indirect information may help correct evaluation of the operations of the person 110. For example, examples of the sensors may include a sensor that detects the spatial position of the intermediary object, a sensor that detects the orientation of the intermediary object, a sensor that detects the state (change in the state such as temperature, color, or shape) of the intermediary object, a sensor that detects the environmental state (physical quantities and information associated with the environment, such as surrounding temperature and humidity) of the intermediary object, and the like. In addition, a sensor may also be used that detects a force exerted on the intermediary object due to manipulation by the person 110, physical quantities (acceleration, vibration, cutting noise etc.) associated with the intermediary object, or the like. For example, in the case of driving an automobile, a steering operation, an accelerator operation, a brake operation, various switch operations, and the like may be detected by a sensor attached to a driving unit.

### Functional configuration

As shown in FIG. 2, the operation information generating apparatus 100 includes a sensor information input unit 201, a target object information input unit 202, an adjacent task information input unit 203, a task data recording unit 204, an operation selecting unit 205, an operation classifying unit 206, an operation combining unit 207, an operation evaluating unit 208, an operation improving unit 209, a data converting unit 210, and a result output unit 211.

The sensor information input unit 201 has a function of acquiring sensor data from the sensors 101. The target object information input unit 202 has a function of acquiring information regarding the task object 111 (e.g. component ID, internal information and relational state of components, apparatus specifications etc.). The adjacent task information input unit 203 has a function of acquiring information regarding adjacent task (e.g. content and progress of a task in an upstream process and a downstream process in a production line, etc.). The task data recording unit 204 has a function of recording, on the storage device, information regarding operations of a person from the start to the end of a task (hereinafter, "task data"), based on the information acquired by the sensor information input unit 201, the target object information input unit 202, and the adjacent task information input unit 203. For example, a plurality of pieces of task data on different operators or different degrees of mastery are recorded by making a plurality of people carry out the same task more than once.

The operation selecting unit 205 has a function of selecting good task data from the plurality of pieces of task data recorded by the task data recording unit 204. The operation classifying unit 206 has a function of dividing an overall operation of a task into a plurality of partial operations and classifying these partial operations, based on the selected task data. The operation combining unit 207 has a function of selecting a best partial operation for each partial operation, and generating an optimum operation that is optimized through the entire task, by combining the selected best partial operations. The operation evaluating unit 208 has a function of evaluating the optimum operation generated by the operation combining unit 207, and the operation improving unit 209 has a function of further improving the optimum operation as needed. Since processing of the operation evaluating unit 208 and the operation improving unit 209 is optional, these functional units may be omitted.

The data converting unit 210 has a function of converting optimum operation data generated by the operation combining unit 207 into data in a format that is suitable for usage. The result output unit 211 has a function of outputting the optimum operation data converted by the data converting unit 210.

### Definition of task

In this embodiment, "task" is defined as "an act that a person carries out using part of or all of his or her body in order to accomplish a set goal (objective)". Accordingly, carrying out a task always involves operations of a person. A configuration may also be employed in which, by allowing any procedure or process to accomplish the goal to be used, operations performed in the process of carrying out the task vary to some extent when the task data is recorded, depending on the person who carries out the task or the degree of mastery of the task.

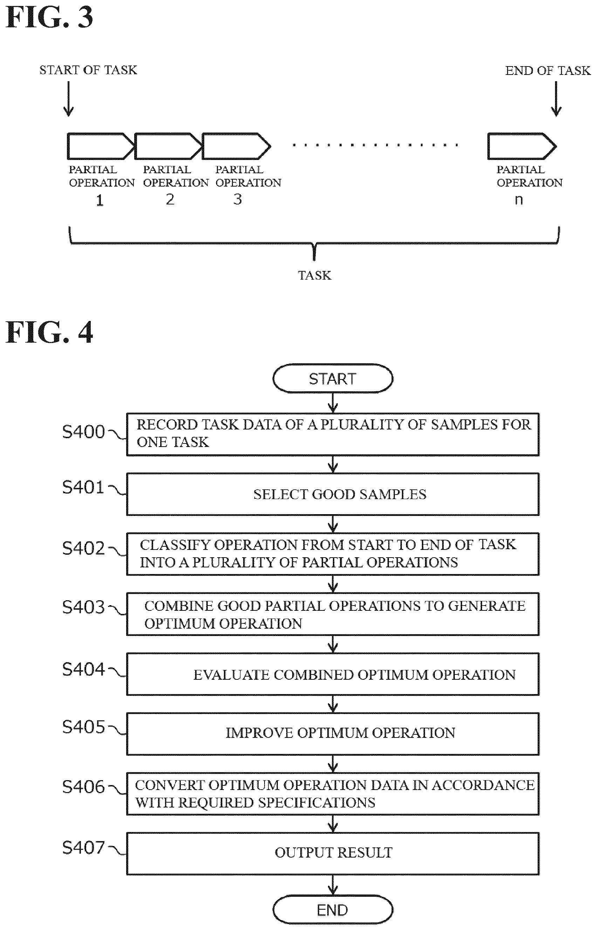

As schematically shown in FIG. 3, one task has a start and an end, and an overall operation of a task is considered to be constituted by a combination of a plurality of continuous partial operations. One partial operation affects the following partial operation. To put this differently, a partial operation between other partial operations is performed while taking over the results of all operations that have been performed so far. In many cases, partial operations between other partial operations cannot be omitted.

There are constraints to carry out a task. For example, constraints associated with a task object include, for example, conditions regarding the initial state, intermediate states, and final state of the task object, conditions regarding the state of the task object. Constraints associated with a person (operator) include, for example, a restriction on the operational area for preventing the body from entering a dangerous area, a limit on the operational velocity of the person, a limit on the operation accuracy of the person, movement performance, and the physical size of body parts (hand, foot, finger etc.). Constraints associated with an intermediary object include, for example, a restriction on the use for preventing an operator or a task object from being damaged. When a machine is caused to perform an optimum operation, there are also constraints regarding machine performance, movable area, operation costs, and so on. An optimum operation needs to be generated so as to satisfy these constraints.

### Method for generating optimum operation

Next, a description will be given of a method for generating an optimum operation performed by the operation information generating apparatus 100. FIG. 4 is a flowchart of operation information generation processing.

### (1) Recording of task data

An operator is made to carry out one task more than once, and task data obtained every time the operator carries out the task is recorded by the task data recording unit 204 (step S400). The start and end of the task (start and end of data recording) may be instructed by a person pressing a button or the like, or may also be automatically determined based on signals from the sensors 101. One operator may carry out the task more than once, or a plurality of operators may carry out the task once or more than once per person. To make the best use of differences in the process between people, and expertise and skills based on mastery, favorably, a plurality of operators are made to carry out the task more than once per person. Thus, a plurality of pieces of task data are acquired for the same task. In the following description, individual pieces of task data are also called "task samples", or simply "samples".

The task data includes at least sensor data acquired from the sensor information input unit 201. There may also be cases where the task data includes information regarding a task object acquired from the target object information input unit 202, and information regarding adjacent tasks acquired from the adjacent task information input unit 203, as needed.

### (2) Selection of samples

After a plurality of (e.g. several tens or hundreds of) task samples have been collected by the task data recording unit 204, the operation selecting unit 205 selects a sample with good task efficiency from the plurality of task samples (step S401). This step is a process of roughly narrowing down candidate optimum operations (models). For example, the operation selecting unit 205 may evaluate task efficiency in respective samples using a predetermined evaluation criterion, and select a predetermined number or a predetermined ratio of samples in order from those with good task efficiency (otherwise, samples with bad task efficiency may be excluded).

This selection operation can exclude task samples with wasteful operations. The selected task samples can be considered as samples that include efficient operations (hereinafter, "good samples"). However, not all partial operations included in the top task sample are necessarily the best ones. For this reason, in the processing performed in the subsequent steps, an optimum operation (ideal model) is generated by combining the best partial operations based on the plurality of good samples selected here.

### (3) Classification of operations

The operation classifying unit 206 divides the overall operation performed from the start to the end of the task into a plurality of partial operations and classifies these partial operations, by analyzing the task samples selected by the operation selecting unit 205 (step S402).

The operations can be classified based on operations of the operators, or the intermediate states of the task object, or based on both of these. Operations of an operator is a series of operations in which partial operations are joined. Although operations of the operators slightly vary between the task samples, corresponding partial operations are mostly the same due to the constraints. As a result of the operations of an operator, the task object enters the final state from the initial state through a series of intermediate states. The intermediate states of the task object can be classified based on a change in the position, orientation, state, or the like of the task object. The operations can be classified using the information detected by the sensors 101 regarding the partial operations of an operator, and information detected by the sensors 101 regarding the intermediate states of the task object.

Operations can be classified based on a change in motion. For example, time series data of motion vectors that represent hand motion information (position, direction, velocity, angular velocity, acceleration, angular acceleration etc.) is obtained by a sensor attached to a hand of an operator. Acceleration, deceleration, stop, change in the direction, or the like of the hand can be understood by analyzing changing points in the motion vectors, and it is thus possible to grasp a change in motion (switching of partial operation). Alternatively, a classification technique using deep learning may also be used. For example, time series data can be subject to learning using a recurrent neural network (RNN), which is one of the deep learning techniques. By performing learning through deep learning using time series data of a plurality of task samples as learning data, features appropriate for classification are automatically extracted, and a series of operations in the task are automatically classified into a specific number of partial operations. Similar processing can also be applied to the case of classifying operations using the intermediate states of the task object. For example, a configuration may be employed in which the intermediate states are set using the states (combination of components, position, orientation etc.) of the task object, and an operation performed between adjacent intermediate states is divided into a specific number of partial operations. Then, the thus-divided partial operations pertain to transition between the same states, and can thus be classified readily. Although this embodiment envisions that operations are automatically classified through data analysis, classification tasks may partially be performed by a person.

There may be cases where, as a result of the classification, an entire operation is classified into a plurality of groups. In this case, the following processing is performed for the respective groups to select the best group. For example, an entire operation is classified into a plurality of groups when the order of fitting components differs or when the task is carried out with different hands during an assembly task. If a person has mastered the task to some extent, it can be expected that wasteful partial operations have decreased. Accordingly, the plurality of groups each include a relatively good operation.

When classifying operations, it is favorable to use information detected from the task object. Classification can also be performed while additionally using information detected from an intermediary object, such as a tool, an actuator, or another machine. For example, vibrations, a reaction force, the position, the working status, or the like of a tool can be detected and used as classification information. Alternatively, sensor information regarding an adjacent robot can be used as classification information. Classification may also be performed for each attribute of the operators or each attribute of the task object. Classification need only be performed so that individual partial operations are classified based on the same criterion. This classification may not necessarily match classification as seen by a person. If the task has many variations and cannot be classified into a predetermined number of classifications, one task may be divided into a plurality of tasks, and classification may be performed for each of the divided tasks. The appropriateness of classification can be evaluated using the degree of similarity between samples that pertain to the same classification. The degree of similarity between samples is high if they are classified appropriately.

### (4) Combination of operations

The operation combining unit 207 selects the a best partial operation for each partial operation from the plurality of good samples, and generates data of an optimum operation of the entire task by combining the selected best partial operations (step S403). Specific methods include a method of using any one of the good samples as a base sample, and replacing some of the partial operations in the base sample with better partial operations in the other samples, and a method of specifying the best sample for the respective partial operations, and combining partial operations in the specified samples in order. Either method may be employed here. In this embodiment, the former method is used.

Initially, the operation combining unit 207 selects, as the base sample, a sample with the shortest task time from the task samples selected in step S401. Some of the partial operations in this base sample are replaced with partial operations in the other samples with higher efficiency in the other samples, and thus, the partial operations can be optimized as a whole to obtain an optimum operation. However, if the base sample satisfies a predetermined condition (e.g. if the task time falls below a target time), processing in steps S403 to S405 may be skipped, and the base sample may be output as-is as optimum operation data.

Next, the operation combining unit 207 compares the task efficiency in the base sample with that in the other samples for the respective partial operations, and replaces a partial operation if a better sample is found. For example, when a path through which the task object is moved from a position to another position slightly varies between samples, movement in the base sample can be replaced with movement by the shortest distance.

However, operations of a person vary, and the same person moves differently even when carrying out the same task. As a result, the movement of the task object also differs. Accordingly, when a partial operation is replaced, the following constraints need to be considered so that movement of a person and movement of the task object are not discontinuous: Since operations are performed continuously, the body position of a person needs to be the same at the end of the previous partial operation and at the start of the next partial operation. Also, the position and orientation of the task object needs to be the same at the end of the previous partial operation and at the start of the next partial operation. In addition, since the assembly task is carried out in a three-dimensional space, there are spatial constraints, e.g. different objects cannot occupy the same position, and an object needs to move while avoiding other objects. Moreover, there is an upper limit on the velocity of a person and the task object. Also, the velocity (speed and direction) of a person and the task object needs to be the same at the end of the previous partial operation and at the start of the next partial operation.

When partial operations are combined, some partial operations may also be changed and joined so as to satisfy the constraints. Here, "joining" includes joining of operations of a person, and joining of motions of the task object. When operations of a person or motions of the task object are joined, there are cases where the position and orientation differ between the final state in the previous partial operation and the starting state in the following partial operation. In this case, it is favorable to finely adjust the motion vectors in the respective partial operations so that the position, direction, velocity, and so on match between temporally adjacent partial operations.

It is also favorable that the optimum operation generated through the above procedure is evaluated (step S404) by the operation evaluating unit 208. The most simple evaluation criterion for determining whether or not the generated operation is optimum is whether or not the task time (time required from the start to the end of the task) is shortest. In addition to the task time, task quality, safety, degree of fatigue, ease of reproduction, degree of influence exerted on the target object, and so on, can also be added as evaluation criteria. Influences exerted on other things in the entire assembly task may also be evaluated.

Thereafter, the operation improving unit 209 finely adjusts the optimum operation as needed (step S405). If any point to be improved is found through the evaluation in step S404, a related partial operation can be modified so as to improve the evaluation result. Improving methods include, for example, a method of replacing a related partial operation with a partial operation included in another sample, a method of acquiring a better sample by clearly indicating the point to be improved to an operator and having the operator retry the task, and a method of partially changing the partial operation and joining the changed partial operation. A further increase in efficiency can be expected by clearly and objectively indicating how to improve operations related to which partial operation in the task. Although an example has been described here in which operations are optimized in terms of the task time and then finely adjusted, evaluation for a plurality of evaluation criteria may be simultaneously performed using one evaluation function. In this case, the improvement step S405 is not needed.

### (5) Conversion of data

The data converting unit 210 converts the optimum operation data obtained through the above procedure into data in a format that matches specifications (usage) required by an output destination (step S406). Data of the combined optimum operation is given by a vector sequence that represents motion of a person or the task object, for example. Specifically, the optimum operation is expressed in the form of time series data of the motion vectors that represents the position and direction in each unit time. If the specifications required by an apparatus or an application that are to use the optimum operation data are the same, data conversion can be omitted.

### (6) Output of result

The result output unit 211 outputs the combined (synthesized) optimum operation. Various output methods, output destinations, and data usage are conceivable.

For example, an electronic file that records time series data of motion vectors in the optimum operation may be output. Thus, the optimum operation data can be used in another apparatus or application. The result output unit 211 may also display a graph of the motion vectors on a screen. Thus, the content of operations can be checked for respective items detected by the sensors. A name and an identification number may also be given to each partial operation so that the partial operations can be identified and checked in detail. Alternatively, the combined optimum operation and individual operations of individual operators or average operations may be displayed in a comparable manner.

A configuration may also be employed in which motion vectors in the optimum operation are converted into physical motion using three-dimensional CG, and a moving image in which the optimum operation is reproduced using CG is displayed. Thus, operations of a person and motion of the task object in the best sample and the combined optimum operation can be checked on the moving image. At this time, a portion with bad task efficiency can be found by displaying a moving image obtained by shooting the task carried out by each individual operator, and a moving image of the optimum operation using CG, side-by-side. Displaying such moving images are favorable for operator training.

A configuration may also be employed in which real-time motion of an operator is compared with the optimum operation, and the operator is notified of the comparison result. For example, motion of an operator is monitored using a sensor, and is compared with the optimum operation data in real time. When the difference between the motion of an operator and the optimum operation is greater than a predetermined threshold, a sensor or a wearable terminal that the operator wears notifies the operator that the motion of the operator is not appropriate, using notification sound or vibrations. This mechanism allows the operator to understand, in real time, whether or not his/her motion matches the optimum motion. Furthermore, by repeating the task, the operator can efficiently master the optimum operation for the respective partial operations.

The optimum operation data can be used as data for controlling another device. For example, the optimum operation data can be converted into data for controlling a machine such as a robot or a manufacturing apparatus, and output the converted data. Thus, teaching of a robot, which has been conventionally conducted by a person, is no longer needed. Moreover, skills and expertise mastered by a human expert can be disseminated to a machine.

### Examples

Next, a more detailed example of the operation information generating apparatus 100 will be described while taking an assembly task in a factory as an example. In this example, knowledge acquired by a plurality of operators as a result of actually carrying out the assembly task can be disseminated to other operators or machines. The operators may also include a machine such as a humanoid robot.

### Assembly task

Evaluation can be performed after dividing the entire task into portions. Even though the entire task may be complicated, each portion may be a comparatively simple operation, if the evaluation is broken down into individual steps. For example, in the task of assembling 30 components, there is a very high number of combinations of intermediate states, and an efficient task procedure cannot be readily estimated. However, in an example of attaching three components, an efficient task procedure can be readily estimated.

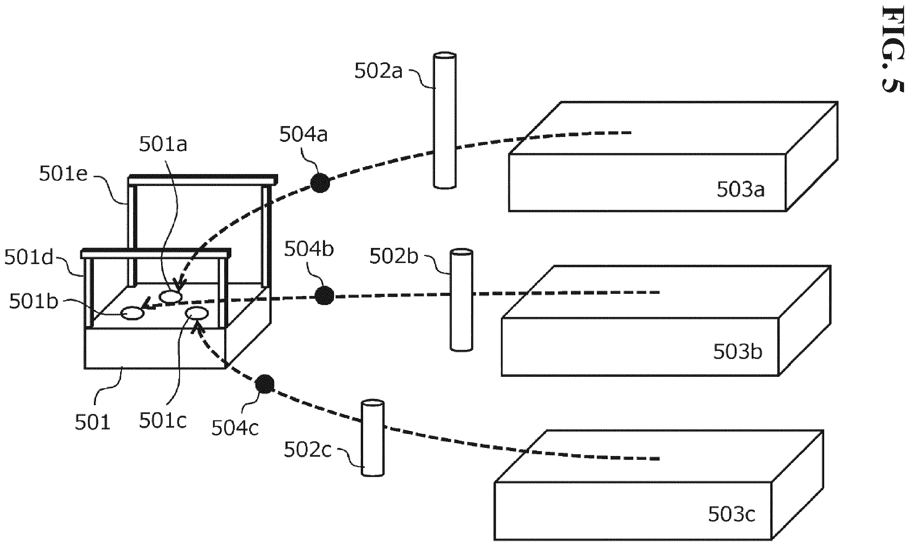

For example, the following portions are analyzed. As shown in FIG. 5, a task is envisioned in which three components 502a, 502b, and 502c with different lengths are attached to a base component 501 that has three holes. The component 502a, which is in a component box 503a, the component 502b, which is in a component box 503b, and the component 502c, which is in a component box 503c, are inserted into and attached to holes 501a, 501b, and 501c, respectively, in the base component 501. Since frames 501d and 501e have been attached to the front and rear sides of the base component 501, the components 502a, 502b, and 502c need to be attached while avoiding the frames 501d and 501e.

In this example, the task can be carried out quickly with a procedure in which the component 502a is inserted into the hole 501a from behind the front frame 501d via a position 504a, thereafter the component 502b is inserted into the hole 501b from behind the front frame 501d via a position 504b, and the component 502c is inserted into the hole 501c from the front side of the front frame 501d via a position 504c. By first inserting the rear component 502a and inserting the component 502c last, an operation to move the component 502c to the position of the hole 501c while avoiding the front frame 501d is facilitated.

The output of the sensors 101 at the time when the above task was performed is recorded by the task data recording unit 204. After repeating the task a specific number of times, an operator gradually masters the task, and the task time shortens. However, the assembly operation performed by the operator who carried out the task within the shortest time is not always optimum. This is because, when each of the partial operations is considered, there may be cases where a partial operation performed by another operator is better.

In the case of this example, there are 4! combinations of the components, but a combination cannot be used with which the combined state cannot be kept. In this example, there are combinations of orders in which three components are attached. These attaching orders involve different operability. This is because a component that is attached first affects the task of attaching a component to be attached later. For example, if the two components on the front side are attached first, the operability of the task of attaching the component to be attached on the rear side deteriorates because the task is hindered by the two components on the front side.

In factories, an optimum task procedure needs to be defined for each task. Conventionally, a written task procedure is created in advance by a person, and operators carry out the task in accordance with the given written procedure. However, in the case of manufacturing a small amount of many types of products, there is a variety of task procedures. Accordingly, it is desirable that an efficient task procedure can be found through learning at the site. In this regard, the apparatus in this example makes it possible to evaluate more efficient operations based on various types of sensor data associated with the operability at the time when the actual task was carried out.

An example of the task to be evaluated is as follows. In this example, the task of attaching the three components 502a, 502b, and 502c to the base component 501 is recorded. A series of operations to be recorded is as follows. An operator performs an operation to pick up each of the three components 502a, 502b, and 502c from the component boxes, bring them close to the holes in the base component 501, and fitting them into the holes. While moving each component, the operator moves the component while avoiding other objects. Upon approaching the corresponding hole, in order to fit the component into the hole, the operator aligns the spatial orientations of the hole and the component with each other to form a positional relationship in which the component can be fitted into the hole. The operator inserts a leading end of the component into the entrance of the hole. The operator then checks that the fitting is complete, and moves away his hand. The working velocity during each of a series of operations affects the overall task time. A series of motion is detected by a plurality of sensors, and is recorded as multi-dimensional vectors.

### Operations of apparatus

### (1) Recording of task data

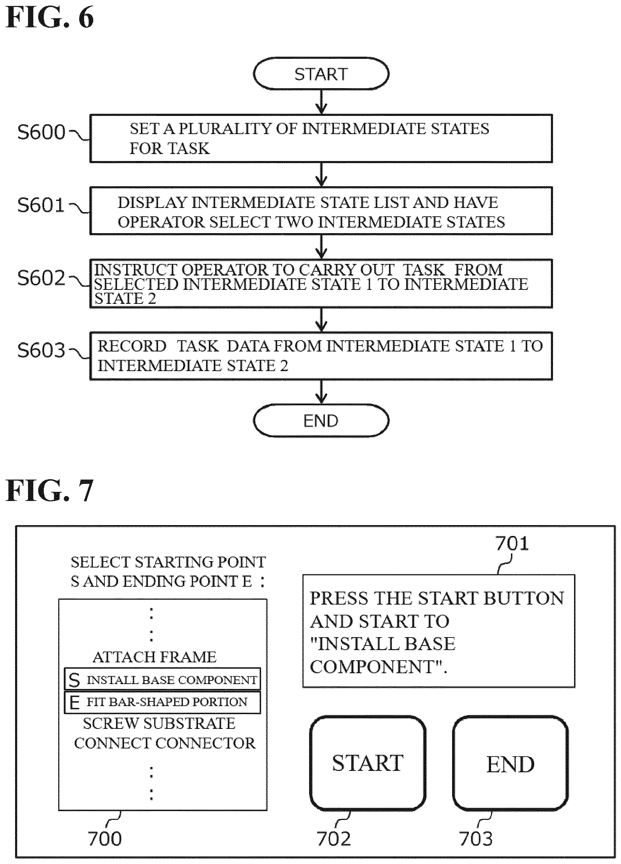

FIG. 6 illustrates a processing flow of the task data recording unit 204. Initially, the task data recording unit 204 sets a plurality of intermediate states for the assembly task, and creates a list of the intermediate states (step S600). The task data recording unit 204 displays an intermediate state list 700 on the display device to have the operator select two intermediate states, as shown in FIG. 7 (step S601). FIG. 7 shows an example in which "install base component" and "fit bar-shaped portion" are selected as an intermediate state 1 (starting point of the task) and an intermediate state 2 (ending point of the task), respectively. The task data recording unit 204 instructs the operator to carry out the task from the selected intermediate state 1 to intermediate state 2 (step S602). In the example in FIG. 7, a start button 702 and an end button 703 are displayed together with a message 701 that prompts the operator to start the task. Upon the operator pressing the start button 702, the operation information generating apparatus 100 starts fetching various kinds of sensor data from the sensors 101. The task data recording unit 204 generates the task data that records operations from the intermediate state 1 to the intermediate state 2, based on the data fetched from the sensors 101, and stores the generated task data in the storage device (step S603). The task data is recorded until the operator presses the end button 703.

In this example, time series data of multi-dimensional vectors that record the position and direction of the right wrist of the operator at predetermined intervals (e.g. every 0.1 second) is recorded as the task data by a motion sensor attached to the right wrist of the operator. For example, five operators each carry out the task ten times, and 50 task samples are obtained by recording the operations of these operators.

### (2) Selection of samples

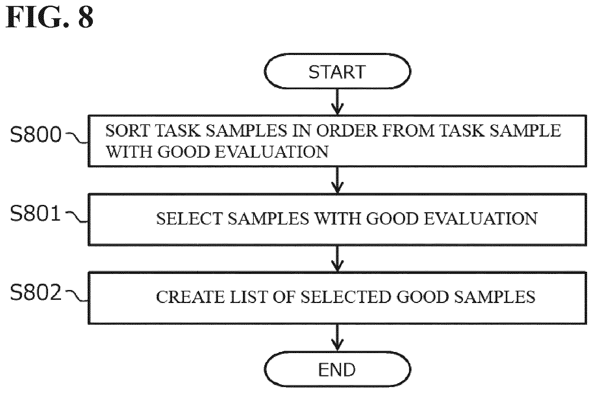

FIG. 8 illustrates a processing flow of the operation selecting unit 205. The operation selecting unit 205 sorts the 50 task samples recorded by the task data recording unit 204 in order from the task sample with the best evaluation, using a predetermined evaluation criterion (step S800). In this example, the task samples are sorted in order from the task sample with the shortest task time. However, the evaluation criterion may also be an evaluation criterion for evaluating the task safety or the influence exerted on operators or components. Next, the operation selecting unit 205 selects the top 20% of the samples with good evaluation from the 50 task samples (step S801), and lists the selected samples (step S802). In this example, a list is obtained in which task data of 10 samples is described in order from a sample with the shortest task time. In the following description, a selected sample with good evaluation is called "good sample", and the sample with the best evaluation, out of the good samples, is called "best sample".

### (3) Classification of operations

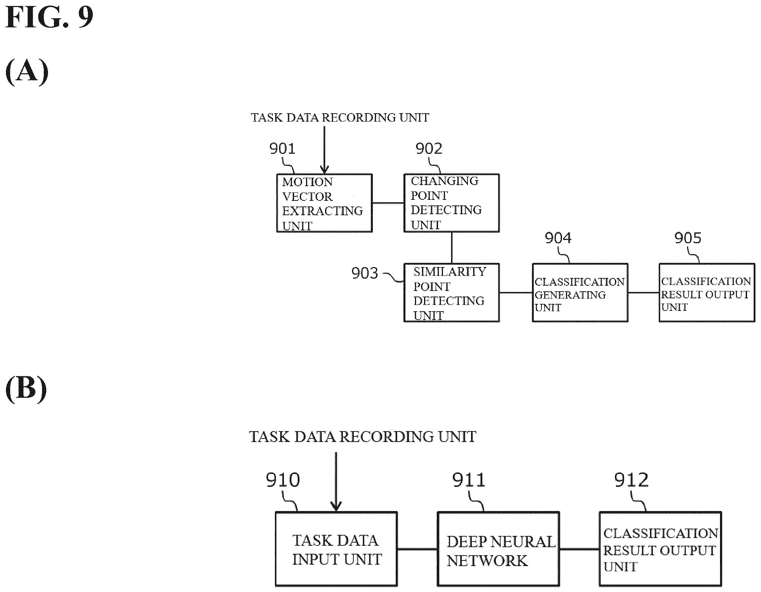

FIG. 9(A) illustrates a configuration example for classifying operations based on a change in motion, as an example of an internal configuration of the operation classifying unit 206. This operation classifying unit 206 includes a motion vector extracting unit 901, a changing point detecting unit 902, a similarity point detecting unit 903, a classification generating unit 904, and a classification result output unit 905.

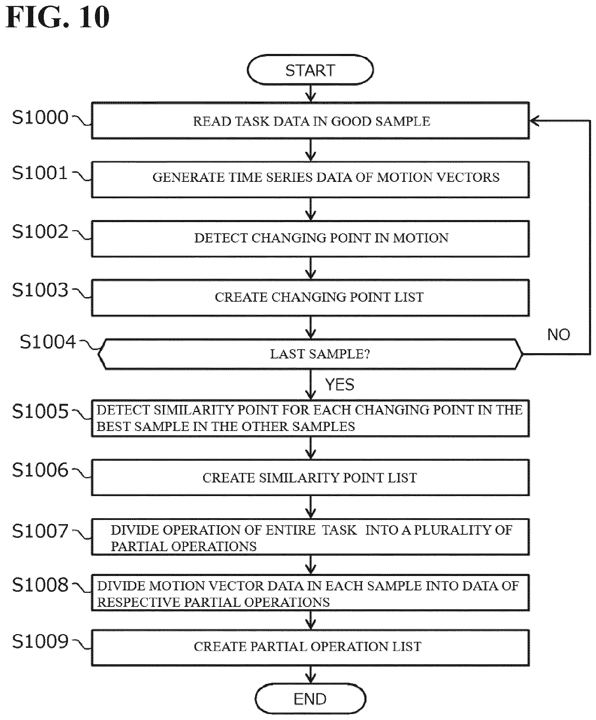

A processing flow of the operation classifying unit 206 will now be described in according with the flowchart in FIG. 10. Initially, task data of one good sample is read from the list (step S1000). The motion vector extracting unit 901 reads out, from the task data, the time series data of the multi-dimensional vectors that record the position and direction of the right wrist of the operator, and obtains a time derivative thereof to generate time series data of motion vectors that have velocity and angular velocity as elements (step S1001). The changing point detecting unit 902 detects a changing point in the motion of the operator by analyzing the time series data of the motion vectors (step S1002). For example, a point in time when the operator starts moving from a stopped state, a point in time when the operator stops moving, a point in time when the operator suddenly increases or decreases the velocity, a point in time when the operator changes the moving direction, and the like, can be detected as changing points in motion. The changing point detecting unit 902 creates a changing point list in which the detected changing points are described (step S1003). By performing processing in steps S1000 to S1003 on all good samples (step S1004), the changing point lists for ten good samples are obtained.

Next, the similarity point detecting unit 903 references the changing point list, and detects a similarity point at which a change in motion at each of the changing points in the best sample is similar to a changing point in the other good samples (step S1005). This is processing to search for points at which operations in the best sample and the remaining good samples correspond to each other. There may be cases where no similarity point is found for one changing point, or where a plurality of similarity points are found. Elastic matching and a genetic algorithm can be used to detect similarity points. The similarity point detecting unit 903 creates a similarity point list in which similarity points corresponding to the respective changing points in the best sample are listed (step S1006).

Next, the classification generating unit 904 divides the overall operation of the task in the best sample into a plurality of partial operations, based on the changing point list for the best sample (step S1007). If only a few changing points are included in the best sample (e.g. if there are several changing points), units segmented by changing points may be set as partial operations. If the number of changing points is large (e.g. if there are dozens of changing points or more), some singular points may be extracted from the changing points included in the changing point list, and units segmented by these singular points may be set as partial operations. In this case, a point at which the change is particularly significant, a point at which the moving direction changes, a point at which other good samples have a similarity point, and the like, may be preferentially selected as the singular points. Note that the task of classifying the partial operations may also be partially carried out by the user. For example, it is possible to present, on the display device, the partial operations classified by the classification generating unit 904, and allow the user to modify the presented partial operations (rejoin or re-divide partial operations).

Next, the classification generating unit 904 divides the time series data of motion vectors in the best sample into data of each partial operation, and also divides the time series data of motion vectors in the other good samples into data of the respective partial operations, based on the similarity point list (step S1008). Lastly, the classification result output unit 905 creates and outputs a partial operation list (step S1009). The partial operation list is a list in which data of motion vectors in 10 good samples is listed for each partial operation list.

Although an example of a configuration and processing in the case of classifying operations based on changes in motion has been described thus far, operations can also be classified using deep learning techniques. In this case, as shown in FIG. 9(B), the operation classifying unit 206 can be constituted by a task data input unit 910 for inputting task data of good samples, a deep neural network 911 for classifying the input task data, and a classification result output unit 912 for creating and outputting a partial operation list based on the classification result. In the case of this configuration as well, the classification result from the deep neural network 911 may be presented to allow the user to modify the classification result.

### (4) Combination of operations

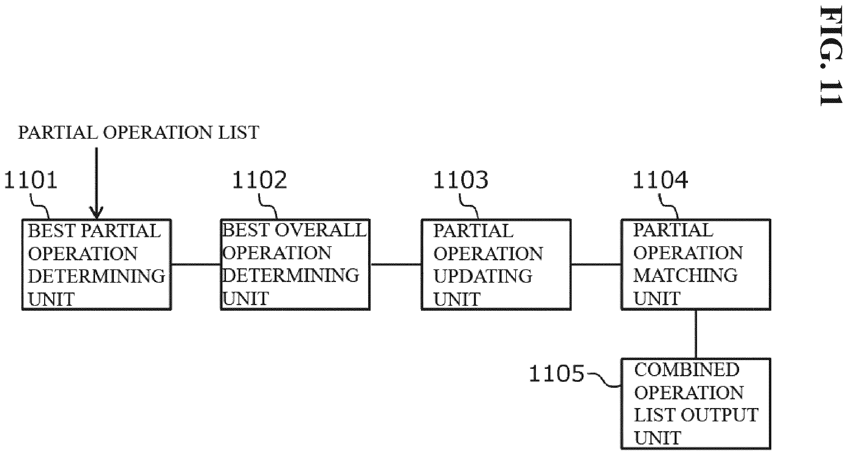

FIG. 11 shows an example of an internal configuration of the operation combining unit 207. The operation combining unit 207 includes a best partial operation determining unit 1101, a best overall operation determining unit 1102, a partial operation updating unit 1103, a partial operation matching unit 1104, and a combined operation list output unit 1105.

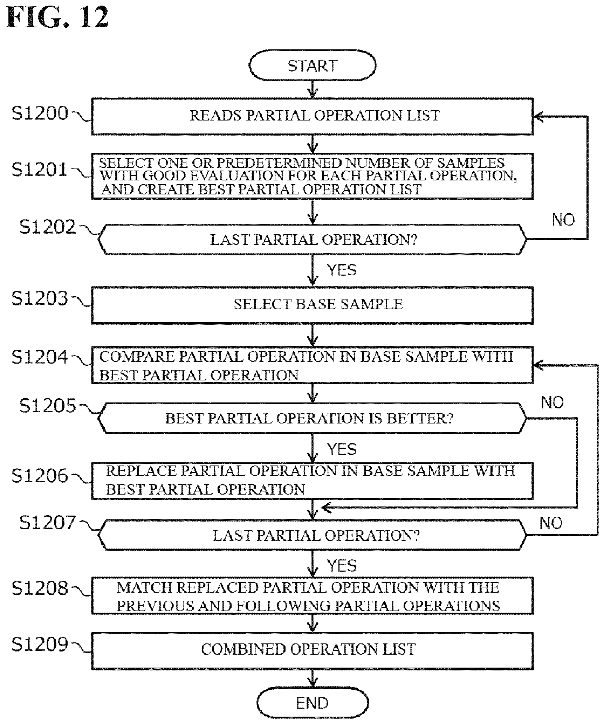

A processing flow of the operation combining unit 207 will now be described in accordance with the flowchart in FIG. 12. First, the best partial operation determining unit 1101 reads the partial operation list (step S1200). The best partial operation determining unit 1101 then evaluates partial operations in each sample using a predetermined evaluation criterion, and creates a best partial operation list in which one or a predetermined number of samples with good evaluation are described (step S1201). In this example, three samples are selected in order from a sample with shorter task time of partial operations, and data of the selected samples is described in the best partial operation list. However, the evaluation criterion may be one or more evaluation criteria from among task time, task quality, operator safety, degree of fatigue of an operator, ease of reproduction of operation, and influence exerted on a target object. By performing processing in steps S1200 and S1201 on all of the partial operations, data of the best motion (local optimum solution) for each partial operation can be acquired.

Next, the best overall operation determining unit 1102 selects a base sample to serve as a base, from the ten good samples (step S1203). For example, the best sample in which the task time of the entire task is shortest may be selected as the base sample. Alternatively, the sample that appears most frequently in the best partial operation list created in step S1201 may be selected as the base sample.

Next, the partial operation updating unit 1103 compares partial operations in the base sample with partial operations in the best partial operation list in order from the top partial operation (step S1204). If a partial operation in the best partial operation list is better (step S1205), the partial operation in the base sample is replaced with the partial operation in the best partial operation list (step S1206). Here as well, which partial operation is better may be determined using the same criterion as the evaluation criterion used in step S1201. However, to simplify later matching processing, it is also favorable to consider consistency (ease of joining) with the previous and following partial operations, rather than simply determining the better partial operation only using an evaluation criterion such as task time or task quality. Processing in steps S1204 to S1206 is performed on all of the partial operations (step S1207).

If any partial operation is replaced in step S1206, motion needs to be matched (joined) between the replaced partial operation and the previous and following partial operations. The partial operation matching unit 1104 matches (joins) partial operations in different samples (step S1208). An example of joining a partial operation A in a sample 1 to a partial operation B in a sample 2 will be described. For an operator to smoothly carry out components the assembly task without inconsistency, at least the position, direction, and velocity of a hand of the operator, and the position and orientation of the task object need to match at the end of the partial operation A and at the start of the partial operation B. Accordingly, the partial operation matching unit 1104 finely adjusts motion vectors in the latter half of the partial operation A and the first half of the partial operation B so that the motion vectors continuously change from the partial operation A to the partial operation B. For example, motion vectors can be adjusted using a method such as a genetic algorithm or curve fitting. In the case of using a genetic algorithm, the way motion vectors are changed can be optimized by comparing motion in respective generations, using smoothness of motion of a hand or the task object as an evaluation criterion.

After partial operations are replaced and matched as described above, the combined operation list output unit 1105 outputs a combined operation list in which data of motion vectors in the respective partial operations is listed (step S1209). This combined operation list is data that represents the optimum operation of the above-described assembly task. The shortest task time can be achieved by carrying out the task in accordance with the motion vectors defined in the combined operation list.

The operation evaluating unit 208 may also evaluate whether or not the combined operation list is good, using other evaluation criteria. At this time, the entire task in the combined operation list may be evaluated, or the individual partial operations that constitute the combined operation list may be evaluated. Examples of useful evaluation criteria include the following ones.
- Task quality: higher task quality is better. For example, assembly accuracy after the assembly, the result of inspection after the assembly process, and the like, can be used as evaluation criteria.
- Safety: since no injury or accident must occur during the assembly task, higher safety is better. For example, evaluation criteria may be the distance between the body of an operator or a task object and other object (whether risk of interference or collision is low), the distance between the body of an operator and a prohibited area, a method of handling a tool, and the like.
- Degree of fatigue: it is desirable that an operator is less tired. For example, evaluation criteria may be an integrated value of acceleration of a hand of an operator, the distance by which the operator moves, the results of sensing a bodily change such as a change in blood pressure, heart beats, or blood flow, and the like.
- Ease of reproduction: even if an optimum operation is created by combination, it would be meaningless if an operator or a robot cannot reproduce this operation. For example, evaluation criteria may be that the maximum velocity is not too high, the velocity does not change drastically, and the tolerable errors in the position and orientation are large (i.e. a slight shift can be readily recovered), for example.
- Influence exerted on task object: for example, evaluation criteria may be degrees of influence exerted on a task object, such as a position and pressure when a component is gripped, deformation during assembly, impact applied when a task object is placed on a base, and a temperature change during the task.

Furthermore, an influence exerted on other things during the entire assembly task may also be evaluated. For example, the evaluation criteria may also include, for example, the orientation of the task object when being placed on a conveyer, since it may affect the downstream processes. Some of the aforementioned evaluation criteria may also be combined. When evaluation criteria are combined, these evaluation criteria can also be weighted.

The operation improving unit 209 can partially improve the combined operation list, as needed. The combined operation list generated by the operation combining unit 207 may be optimum when evaluated in terms of task time, but operations in the other samples may be better when an attention is paid to other evaluation criteria. For example, if safety in a certain partial operation in the combined operation list does not reach a predetermined level, this partial operation can be replaced with a partial operation with higher safety in another sample.

### (5) Conversion of data

The data converting unit 210 converts the combined operation list obtained through the above procedure into data in a format that matches specifications (usage) required by an output destination.

### (6) Output of result

The result output unit 211 outputs the optimum operation defined by the combined operation list. Various output methods, output destinations, and data usage are conceivable.

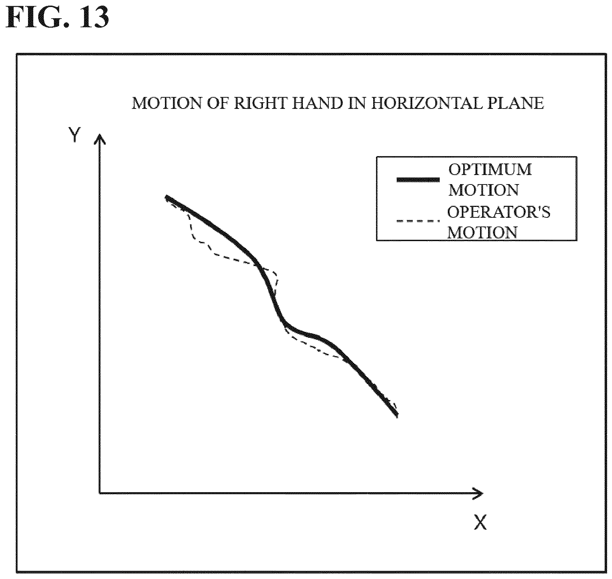

For example, information that indicates operations with parameters may be output as-is. FIG. 13 shows an example in which motion of a hand of an operator in a horizontal plane (XY plane) is displayed as a graph on a screen. A solid line indicates the optimum operation defined by the combined operation list, and a broken line indicates motion made by an operator. An optimum way to move can be understood by reading the solid-line graph. Also, wasteful motion of the operator can be readily understood by comparing the solid-line graph with the broken-line graph.

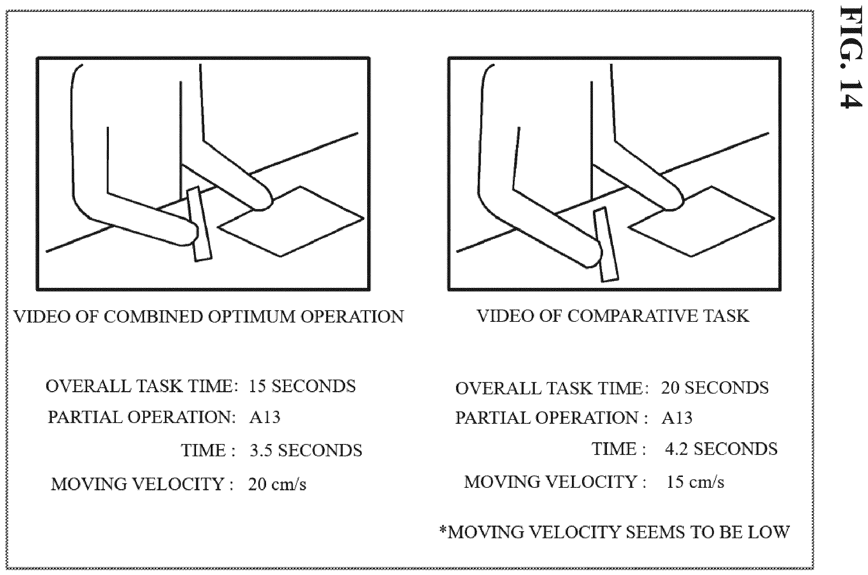

A reproduced operation of the optimum operation may also be generated using three-dimensional CG based on the combined operation list, and displayed on the screen. FIG. 14 shows an example in which a moving image of the optimum operation using CG, and a moving image obtained by shooting the assembly task carried out by an operator to be compared are displayed side-by-side. The operator can understand points to be improved in the operation that the operator performs, by comparing the two moving images. On this screen, a portion in which the optimum operation and the operation performed by the operator differs significantly may be displayed in an emphasized manner, or a graph indicating the motion at this time may be displayed as a graph. Furthermore, a difference between operations and points to be improved may also be output as language information. For example, an operator can be notified of any points to be improved so that the operator can readily understand it, by giving a message: "it seems that you lift up the component too slowly after picking it" to describe a point regarding pick-up of a component that the operator should notice.

The results of evaluating operations may also be output. The results of evaluating the individual partial operations using various evaluation criteria can be output on the screen. For example, determination can be objectively made by using various evaluation criteria that include not only task time, but also whether there is a prohibited operation, a burden on a target object, the amount of consumed energy, and the like.

The result output unit 211 may also output various kinds of data in the form of electronic files. For example, individual task data and optimized operations can be output as electronic files for later analysis, and registered to a database while giving attributes to these files.

The optimum operation data can also be converted into machine control information. Thus, skills of an experienced operator can be disseminated to a machine. For example, a task that is more difficult to disseminate than an assembly task, such as a cutting task and a welding task, can be described with parameters and thus disseminated, by detecting, with sensors, vibrations and a reaction force of a tool, colors and temperature of a target object, and the like, and using them to classify the task. For example, if an experienced operator carries out a task based on a specific event in which a reaction force increases or decreases in a cutting process, or a specific event in which cutting sound changes, such an event is reflected in the classification of the task, and thus, the task is disseminated to a machine.

The above-described operation information generating apparatus 100 according to this embodiment can automatically generate a better optimum operation (model) in which not only the entire task is optimized, but also respective partial operations are also optimized locally, based on a plurality of task samples.

Note that the configuration according to the above embodiment merely describes a specific example, and is not intended to limit the scope of the invention. The present invention may employ a variety of specific configurations without departing from the technical idea thereof.

The technical idea disclosed in this specification can also be specified as the following invention.
Note 1: An operation information generating apparatus comprising:
   a hardware processor and a memory configured to store a program, wherein, in accordance with the program, the hardware processor records, as task data, information regarding an operation of a person from a start to an end of a task,
   divides an overall operation from the start to the end of the task into a plurality of partial operations, and
   selects a best partial operation for each partial operation from a plurality of samples of the task data for the same task, and generates data of an optimum operation of the entire task by combining the selected best partial operations.
Note 2: An operation information generating method comprising:
   a step of recording, as task data, information regarding an operation of a person from a start to an end of a task, by at least one hardware processor;
   a step of dividing an overall operation from the start to the end of the task into a plurality of partial operations, by at least one hardware processors; and
   a step of selecting a best partial operation for each partial operation from a plurality of samples of the task data for the same task, and generating data of an optimum operation of the entire task by combining the selected best partial operations, by at least one hardware processor.

### INDEX TO THE REFERENCE NUMERALS

100 ... Operation information generating apparatus, 101 ... Sensor, 102 ... Information processing apparatus, 110 ... Person (operator), 111 ... Task object 201 ... Sensor information input unit, 202 ... Target object information input unit, 203 ... Adjacent task information input unit, 204 ... Task data recording unit, 205 ... Operation selecting unit, 206 ... Operation classifying unit, 207 ... Operation combining unit, 208 ... Operation evaluating unit, 209 ... Operation improving unit, 210 ... Data converting unit, 211 ... Result output unit
501 ... Base component, 501a, 501b, 501c ... Hole, 501d, 501e ... Frame, 502a, 502b, 502c ... Component, 503a, 503b, 503c ... Component box, 504a, 504b, 504c ... Position 700 ... Intermediate state list, 701 ... Message, 702 ... Start button, 703 ... End button
901 ... Motion vector extracting unit, 902 ... Changing point detecting unit, 903 ... Similarity point detecting unit, 904 ... Classification generating unit, 905 ... Classification result output unit, 910 ... Task data input unit, 911 ... Deep neural network, 912 ... Classification result output unit
1101 ... Best partial operation determining unit, 1102 ... Best overall operation determining unit, 1103 ... Partial operation updating unit, 1104 ... Partial operation matching unit, and 1105 ... Combined operation list output unit

## Claims

1. An operation information generating apparatus comprising:
a task data recording unit configured to record, as task data, information regarding an operation of a person from a start to an end of a task;
an operation classifying unit configured to divide an overall operation from the start to the end of the task into a plurality of partial operations; and
an operation combining unit configured to select a best partial operation for each partial operation from a plurality of samples of the task data for the same task, and generate data of an optimum operation of the entire task by combining the selected best partial operations.

2. The operation information generating apparatus according to claim 1, further comprising:
an operation selecting unit configured to select two or more good samples with good task efficiency, from a plurality of samples of task data recorded while the same task is carried out a plurality of number of times,
wherein the operation combining unit generates the data of the optimum operation using the selected two or more good samples.

3. The operation information generating apparatus according to claim 2,
wherein the operation selecting unit selects, as the good samples, a predetermined number or a predetermined ratio of samples in accordance with a task time of the entire task.

4. The operation information generating apparatus according to claim 3,
wherein the operation selecting unit selects, as the good samples, a predetermined number or a predetermined ratio of samples in order from a sample in which the task time of the entire task is shortest.

5. The operation information generating apparatus according to any one of claims 1 to 4,
wherein the operation combining unit selects the best partial operations by evaluating partial operations in each sample using a predetermined evaluation criterion.

6. The operation information generating apparatus according to claim 5,
wherein the predetermined evaluation criterion includes at least one of task time of a partial operation, task quality, safety of an operator, degree of fatigue of an operator, and ease of reproduction of an operation.

7. The operation information generating apparatus according to any one of claims 1 to 6,
wherein the operation combining unit comprises a partial operation matching unit configured to match motion at an end of a first partial operation with motion at a start of a second partial operation, in a case that the first partial operation is joined to the second partial operation, the first partial operation and the second partial operation being in different samples.

8. The operation information generating apparatus according to claim 7,
wherein the partial operation matching unit performs matching so that at least the position of an operator or a task object coincides at the end of the first partial operation and at the start of the second partial operation.

9. The operation information generating apparatus according to claim 7,
wherein the partial operation matching unit adjusts a motion vector in the first partial operation and in the second partial operation so that the motion vector continuously changes from the first partial operation to the second partial operation.

10. The operation information generating apparatus according to any one of claims 1 to 9, further comprising:
one or more sensors configured to detect motion of an operator,
wherein the task data recording unit records sensor data obtained from the sensors.

11. The operation information generating apparatus according to claim 10,
wherein the sensors include a motion sensor that is attached to the body of an operator.

12. The operation information generating apparatus according to any one of claims 1 to 11,
wherein the operation classifying unit detects a changing point of motion of the body of an operator based on the task data, and divides the overall operation into the plurality of partial operations based on the changing point of motion.

13. The operation information generating apparatus according to any one of claims 1 to 12,
wherein the operation classifying unit includes a deep neural network that has learned a classifying function.

14. An operation information generating method comprising:
a step of recording, as task data, information regarding an operation of a person from a start to an end of a task;
a step of dividing an overall operation from the start to the end of the task into a plurality of partial operations; and
a step of selecting a best partial operation for each partial operation from a plurality of samples of the task data for the same task, and generating data of an optimum operation of the entire task by combining the selected best partial operations.

15. A program for causing a computer to execute each step in the operation information generating method according to claim 14.
